# EUROPÄISCHE PATENTANMELDUNG

(11) **EP 0 792 788 A1**
(43) Veröffentlichungstag der Anmeldung: **03.09.1997**
(21) Anmeldenummer: 96115319.4
(22) Anmeldetag: 24.09.1996
(51) Int. Cl.: B62D 27/02, B62D 27/06, B62D 29/00

(54) **Vorrichtung zum Verbinden von zwei Profilen**

(30) Priorität: 01.03.1996 DE 19607820
(71) Anmelder: Bayerische Motoren Werke Aktiengesellschaft, 80788 München (DE)
(72) Erfinder: Schuster, Horst, 81739 München (DE); Hagenacker, Michael, 80801 München (DE)

(57) **Zusammenfassung**

Vorrichtung zum Verbinden von zwei Strangpreßprofilen über Knotenelemente formschlüssig und durch Klebstoff miteinander zu verbinden.

Die Vorrichtung (6) besteht aus mindestens einem Verbindungsprofil (7,8), dessen Außendurchmesser im unverformten Zustand kleiner ist als der Innendurchmesser des jeweiligen entsprechenden Hohlraumes (3,4,5) der zu verbindenden Profile (1,2), daß das Verbindungsprofil (7 8) mindestens eine verformbare und/oder verstellbare Wand (18,19) aufweist, wobei die Verstellung und/oder die Verformung der Wand (18,19) zu einer Vergrößerung der äußeren Abmessungen des Verbindungsprofils (7,8) führt und daß der dabei zurückgelegte Verstellweg der Wand (18,19) so bemessen ist, daß im verstellten Zustand die Außenfläche (30) des Verbindungsprofils (7,8) an der Innenfläche (29) des Hohlraums (3,4,5) zumindest teilweise anliegt.

## Beschreibung

Die Erfindung betrifft eine Vorrichtung zum Verbinden von zwei Profilen gemäß dem Oberbegriff des Anspruchs 1.

Aus der EP 0 146 716 ist es bereits bekannt, zur Ausbildung einer tragenden Struktur eines Wagenkastens für einen Personenkraftwagen Hohlprofile über Knotenelemente miteinander zu verbinden. An dem Knoten sind Ansätze ausgebildet, dessen Form und Größe dem Hohlraum des zu verbindenden Profils angepaßt ist. Zur zusätzlichen Sicherung können die beiden miteinander zu verbindenden Teile noch miteinander verklebt sein. Nachteilig bei dieser Verbindungstechnik ist, daß aufgrund der für einen sicheren Formschluß notwendigen engen Toleranzen der aufgetragene Klebstoff beim Zusammenstecken der beiden Teile abgestreift wird, so daß eine sichere Verklebung nicht gewährleistet ist. Ferner ist die Verwendung von Knoten nachteilig, wenn ein Profil lediglich verlängert werden soll, da ein Knoten nach außen hin aufträgt, so daß sich keine glatte Oberfläche ergibt.

Aufgabe der Erfindung ist es, eine Vorrichtung zum Verbinden von zwei Profilen zu schaffen, mit der eine einwandfreie Verklebung möglich ist.

Diese Aufgabe wird durch die Merkmale des Anspruchs 1 gelöst.

Durch die erfindungsgemäße Vorrichtung ist es möglich, zwei Profile mit einer einteiligen Vorrichtung miteinander zu verbinden, wenn diese Profile einen Hohlraum mit einem gleichen Innenquerschnitt aufweisen. Bei der erfindungsgemäßen Vorrichtung werden die Vorteile eines Formschlusses und einer sicheren Verklebung optimal genutzt. Mit der erfindungsgemäßen Vorrichtung wird eine Steckverbindung geschaffen, bei der im verbundenen Zustand der Profile lediglich die Fuge oder Trennstelle zwischen den beiden Profilen sichtbar ist.

Durch die erfindungsgemäße Bauweise der Vorrichtung kann die Vorrichtung ohne ein Abschaben des auf die Vorrichtung aufgetragenen Klebers in die Profile eingesteckt werden. Durch das Verspannen von verstellbaren Wänden der erfindungsgemäßen Vorrichtung erfolgt in einfacher Weise eine Anpassung der Vorrichtung an den vorhandenen Hohlraum des jeweiligen Profils, gleichzeitig wird dadurch eine Selbstzentrierung der Vorrichtung erreicht. Die erfindungsgemäße Vorrichtung zeichnet sich durch ihren Leichtbau aus, da die Wanddicken und der Querschnitt den zu übertragenden Kräften angepaßt ist.

Die erfindungsgemäße Vorrichtung ist besonders vorteilhaft zum Verbinden von Strangpreßprofilen, insbesondere aus Leichtmetall, einsetzbar. Die erfindungsgemäße Vorrichtung bietet sich vorteilhafterweise als Reparaturlösung von Strukturen aus Strangpreßprofilen an, bei denen eine Wärmeeinbringung vermieden werden soll und die Reparaturstelle nicht im voraus definiert werden muß, wie dies beispielsweise bei Strukturen mit Knotenelementen der Fall ist.

Ein kontrolliertes Verformen der Vorrichtung wird dadurch erreicht, daß die Wände der Vorrichtung relativ steif sind, während die Übergänge zwischen den Wänden nachgiebig ausgestaltet sind. In einer vorteilhaften Ausführungsform sind die Wände relativ steif, beispielsweise durch das Ausbilden relativ dicker Wände und dünner Übergänge. In einer anderen Ausführungsform können die Wände alternativ oder zusätzlich mit einer Gegenkrümmung versehen sein, die so gestaltet ist, daß im Endzustand die Außenwandflächen der Vorrichtung eben an den Innenwandflächen der zu verbindenden Profile anliegen.

Die Verspannung der erfindungsgemäßen Vorrichtung wird in einfacher Weise durch das Vorhandensein mindestens einer verstellbaren Wand erreicht. Die verstellbare Wand besteht in einer Ausführungsform aus zwei relativ steifen Wandabschnitten, die über nachgiebig ausgebildete Übergänge mit den sich daran anschließenden steifen Wänden verbunden sind. Die beiden Wandabschnitte selbst sind über flexible Übergänge mit einem Spannbauteil verbunden. Das Spannbauteil ist vorteilhafterweise mit mindestens einer Öffnung versehen, in der ein Innengewinde ausgebildet ist.

Beim Verstellvorgang wird in das Spannteil beispielsweise mindestens ein Bolzen mit einem Außengewinde oder eine Schraube eingeschraubt, wobei die Anzahl der Schrauben von der Länge der Vorrichtung abhängt. Das gegenüberliegende Ende dieser Schraube stützt sich je nach Ausführungsform entweder an einer festen Wand oder an einer verstellbaren Wand ab. In beiden Fällen ist es vorteilhaft, wenn zur Lagefixierung der Schraube an der gegenüberliegenden Wand eine Zentrierung der Schraube, beispielsweise über eine entsprechende Vertiefung, vorgesehen ist. Beim Verstellvorgang vergrößert sich der Außendurchmesser der Vorrichtung, da die verstellbare Wand oder die verstellbaren Wände aus ihrer nach innen geneigten Lage nach außen bewegt werden.

Von Vorteil ist ferner, daß auf den Außenflächen der Vorrichtung Abstandsrillen oder Abstandsnoppen oder dergleichen vorgesehen sind, so daß eine Mindestdicke des Klebstoffes gewährleistet ist. Soweit die Außenfläche des Verbindungsprofils nicht an der Innenfläche des betreffenden Profil-Hohlraumes anliegt, wird über den auf die Außenfläche des Verbindungsprofils aufgetragenen Klebstoff eine Verbindung zwischen der Außenfläche und der Innenfläche geschaffen.

Die Verwendung eines Stiftes mit Außengewinde oder einer Schraube hat den weiteren Vorteil, daß durch dieses Verstellwerkzeug gleichzeitig die Lage der Vorrichtung in einem Profil festgelegt ist. Nach dem Aushärten des Klebstoffes wird die Schraube entfernt, so daß kein überstehendes Bauteil an der Außenfläche der Profile verbleibt.

Eine Ausführungsform der Erfindung wird nachstehend anhand von Zeichnungen beispielshalber beschrieben. Dabei zeigen:
- Figur 1: eine perspektivische Ansicht von zwei miteinander zu verbindenden Profilen, wobei sich in einem Hohlraum eines Profils eine unverformte Vorrichtung und in einem zweiten Hohlraum dieses Profils eine bereits verformte Vorrichtung befindet,
- Figur 2: eine Querschnittsansicht von vorne des in der Figur 1 mit den beiden Vorrichtungen versehenen Profils und
- Figur 3: eine Querschnittsansicht einer weiteren Ausführungsform einer einzigen in einem Profil angeordneten Vorrichtung.

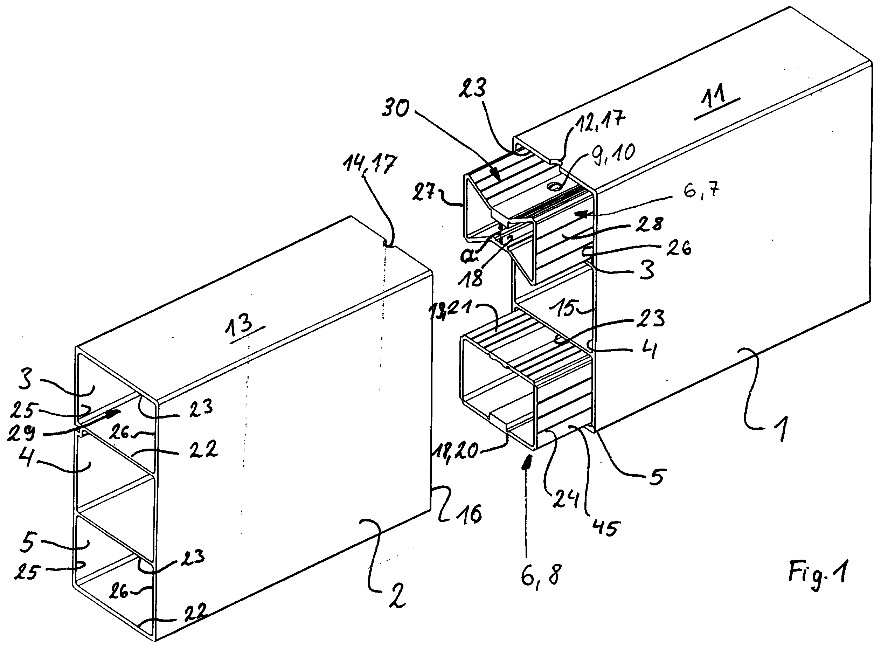

Die Figur 1 zeigt zwei Strangpreßprofile 1, 2 mit jeweils drei Hohlräumen 3, 4, 5. Eine Vorrichtung 6 zum Verbinden der beiden Profile 1, 2 besteht im vorliegenden Fall aus zwei Verbindungsprofilen 7, 8. Die Innenquerschnitte der gegenüberliegenden Hohlräume 3, 4, 5 sind jeweils gleich groß und weisen jeweils die gleiche Form auf. Aus diesem Grund können die Verbindungsprofile 7, 8 jeweils als ein einteiliges und geschlossenes Baute mit einem gleichbleibenden Querschnitt im unverformten Zustand ausgebildet sein. In dem oberen Verbindungsprofil 7 ist eine Durchgangsöffnung 9 dargestellt, die mit einem Innengewinde 10 versehen ist. In der dazu gegenüberliegenden Außenwand 11 des Profils 1 ist ebenfalls eine Öffnung 12 ausgebildet, die in der gezeigten Ausführungsform halbkreisförmig ist. Entsprechend ist in der dazu gegenüberliegenden Außenwand 13 ebenfalls an der Außenkante eine Öffnung 14 vorgesehen, die auch halbkreisförmig ist.

Wenn die beiden Profile 1 und 2 mit ihren Stirnflächen 15 und 16 im zusammengebauten Zustand aneinanderliegen, wird durch die aus den beiden Öffnungen 12 und 14 entstehende Öffnung 17, die beispielsweise dann kreisförmig ist, ein Verstellwerkzeug, beispielsweise eine Schraube mit Außengewinde, in die Öffnung 9 eingeschraubt, bis das untere Ende der Schraube die gegenüberliegende Wand 18 erreicht. Bei einem weiteren Verdrehen der Schraube wird der zwischen den gegenüberliegenden Wänden 18 und 19 vorhandene Abstand "a" immer größer, bis die Außenflächen 20, 21 der Wände 18, 19 an den entsprechenden Innenflächen 22, 23 des Hohlraums 3 anliegen, wie dies für die entsprechenden Flächen des Profils 8 in der Figur 1 gezeigt ist. Die Verbindungsprofile 7, 8 sind mit Erhebungen 24 oder Rillen 45 versehen, deren Höhe oder Tiefe abhängig ist von der erforderlichen Dicke oder Menge des auf die Außenflächen 20, 21 und 25, 26 der Wände 18, 19 und 27, 28 aufzutragenden Klebstoffes.

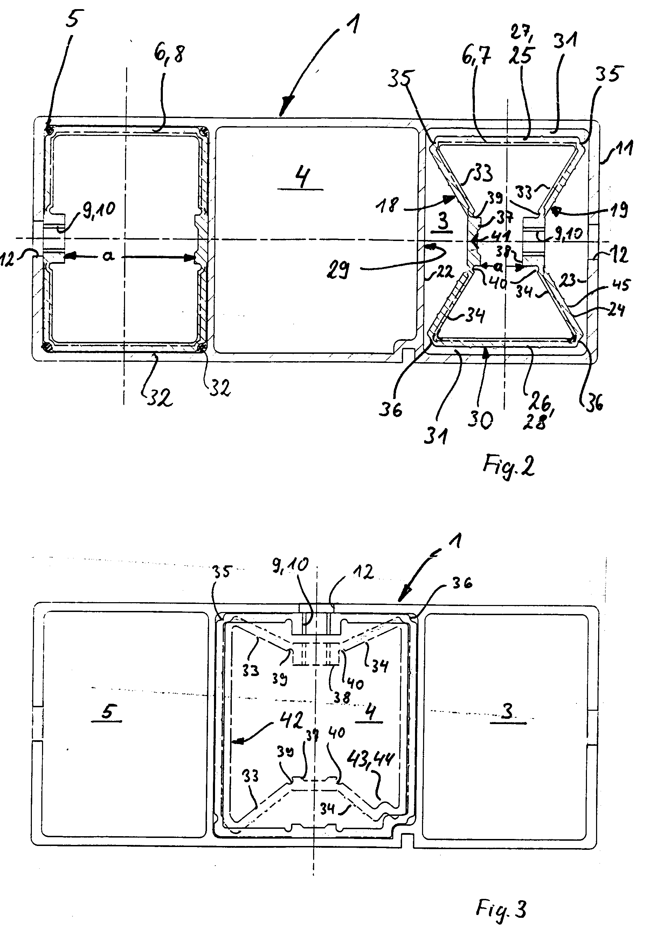

In der Figur 2 ist das Strangpreßprofil 1 in einer Ansicht von vorne mit den in dem Profil 1 angeordneten Verbindungsprofilen 7, 8 der Vorrichtung 6 gezeigt. Zwischen der Innenfläche 29 des Hohlraums 3 und der Außenfläche 30 des Verbindungsprofils 7 besteht ein ausreichend großer Spalt 31, so daß der auf der Außenfläche 30 des Verbindungsprofils 7 befindliche Klebstoff 32 beim Einschieben des Verbindungsprofils 7 in den Hohlraum 3 nicht abgestreift wird. Die Wände 18, 19 sind verstellbar und/oder verformbar ausgebildet.

In der in den Figuren 1 und 2 gezeigten Ausführungsform bestehen die Wände 18, 19 aus jeweils zwei relativ steifen Wandabschnitten 33, 34, die über wie Scharniere wirkende Übergänge 35, 36 mit den angrenzenden Wänden 25, 26 verbunden sind. Die beiden Wandabschnitt 33, 34 sind miteinander jeweils über einen Steg 37, 38 und sich daran anschließende, ebenfalls als Scharniere wirkende Übergänge 39, 40 miteinander verbunden. Die Übergänge 35, 36 und 39, 40 weisen gezielte Deformationsstellen auf, die beispielsweise durch eine Verdünnung der Wandstärke der Übergänge gebildet werden. Der der Öffnung 12 gegenüberliegende Steg 38 weist in der vorliegenden Ausführungsform einen dickeren Querschnitt auf, da in diesem Steg 38 die Durchgangsöffnung 9 mit dem Innengewinde 10 ausgebildet ist. Der dazu gegenüberliegende Steg 37 dient als Gegenlager oder Abstützstelle für das Ende des Verformungswerkzeuges, beispielsweise einer Schraube.

Bei der Herstellung der Durchgangsöffnung 9 mittels eines Bohrers ist es von Vorteil, wenn der Bohrer eine kleine Vertiefung 41 in den Steg 37 bohrt. Auf diese Weise wird das Ende des Verformungswerkzeuges in dem Steg 37 zentriert. Der Abstand "a" zwischen den beiden Stegen 37 und 38 ist kleiner als der Abstand "a" im verformten Zustand, wie dies in bezug auf das verstellte Verbindungsprofil 8 in der Figur 2 gezeigt ist. Nach dem Verstell- und Verformungsvorgang und nach einer ausreichenden Aushärtung des Klebstoffes 32 wird das Werkzeug aus den dann miteinander verbundenen Profilen 1 und 2 und der Vorrichtung 6 entfernt. Die Verbindungsstelle zwischen den Profilen 1 und 2 ist dann nur noch durch eine Trennfuge sichtbar. Aus der Figur 2 ist ferner erkennbar, daß die Wanddicken der Verbindungsprofile 7, 8 ungefähr genau so groß sind, wie die Wanddicken des Profils 1.

Aus der Querschnittsansicht der Figur 3 geht hervor, daß eine Verbindung zwischen den beiden Profilen 1 und 2 auch durch ein einziges Verbindungsprofil 42 erfolgen kann. Eine weitere Besonderheit des Verbindungsprofils 42 besteht darin, daß an einer Ecke 43 ein stufenförmiger Übergang 44 ausgebildet ist.

Die zu verbindenden Profile können neben den in den Figuren 1 bis 3 gezeigten rechteckförmigen Querschnitten auch andere Querschnitte aufweisen. Beispielsweise können diese Profile neben eckigen Querschnitten alternativ oder zusätzlich auch runde Querschnitte haben. So können beispielsweise auch Rohre mit einem kreisförmigen Querschnitt über entsprechende Verbindungsprofile miteinander verbunden werden.

## Patentansprüche

1. Vorrichtung zum Verbinden von Profilen, die Hohlräume mit einem geschlossenen Querschnitt aufweisen, wobei die Vorrichtung in dem jeweiligen Hohlraum der zu verbindenden Profile steckbar und verklebbar ist, dadurch gekennzeichnet, daß die Vorrichtung (6) aus mindestens einem Verbindungsprofil (7, 8) besteht, dessen Außendurchmesser im unverformten Zustand kleiner ist als der Innendurchmesser des jeweiligen entsprechenden Hohlraumes (3, 4, 5) der zu verbindenden Profile (1, 2), daß das Verbindungsprofil (7, 8) mindestens eine verformbare und/oder verstellbare Wand (18, 19) aufweist, wobei die Verstellung und/oder die Verformung der Wand (18, 19) zu einer Vergrößerung der äußeren Abmessungen des Verbindungsprofils (7, 8) führt und daß der dabei zurückgelegte Verstellweg der Wand (18, 19) so bemessen ist, daß im verstellten Zustand die Außenfläche (30) des Verbindungsprofils (7, 8) an der Innenfläche (29) des Hohlraums (3, 4, 5) zumindest teilweise anliegt.

2. Vorrichtung nach Anspruch 1, dadurch gekennzeichnet, daß die verstellbare Wand (18, 19) aus mindestens zwei nach innen geneigten Wandabschnitten (33, 34) besteht, daß diese Wandabschnitten (33, 34) mit den angrenzenden Wänden (27, 28) über verformbare Übergänge (35, 36) verbunden sind und daß die Verbindung der Wandabschnitte (33, 34) mit einem Steg (37, 38) über verformbare Übergänge (39, 49) erfolgt.

3. Vorrichtung nach den Ansprüchen 1 oder 2, dadurch gekennzeichnet, daß die Wände (18, 19, 25, 26) so steif sind, daß sie sich bei der Verstellung nicht verformen und daß die Übergänge (35, 36, 39, 40) zwischen den Wänden (18, 19, 27, 28) verformbar ausgebildet sind.

4. Vorrichtung nach einem der vorstehenden Ansprüche, dadurch gekennzeichnet, daß an der Außenfläche (30) des Verbindungsprofils (7, 8) Erhebungen (24) oder Abstandsrillen (45) zur Aufnahme einer Mindestmenge an Klebstoff (32) ausgebildet sind.

5. Vorrichtung nach einem der vorstehenden Ansprüche, dadurch gekennzeichnet, daß die Wandstärken des Verbindungsprofils (7, 8) in der gleichen Größenordnung wie die Wandstärken der zu verbindenden Profile (1, 2) liegen.
